# EUROPEAN PATENT APPLICATION

(11) **EP 4 838 336 A1**
(43) Date of publication of application: **11.11.2026**
(21) Application number: 26174102.9
(22) Date of filing: 22.04.2026
(51) Int. Cl.: G06F 1/3231, G02B 27/01, G06F 1/16, G06F 1/3287, G06F 3/01, H04N 13/344, H04N 13/366, H04N 23/65, H04N 23/667

(54) **COORDINATION OF LOW-POWER AND HIGH-POWER CAMERAS AT HEAD-WEARABLE DEVICES AND TECHNIQUES AND METHODS OF USE THEREOF**

(30) Priority: 07.05.2025 US 202563801745 P
(71) Applicant: Meta Platforms Technologies, LLC, Menlo Park, CA 94025 (US)
(72) Inventor: KHAN, Saara, Menlo Park, 94025 (US); CAPAK, Peter Lawrence, Menlo Park, 94025 (US); PRASAD, Rahul, Menlo Park, 94025 (US); EDWARDS, Joshua, Menlo Park, 94025 (US)
(74) Representative: Murgitroyd & Company

(57) **Abstract**

A method for switching an imaging sensor between two states of operation at a head-wearable is described. The method includes, while the head-wearable device is worn by a user and the imaging sensor of the head-wearable device is operating in a first state, and in accordance with a determination that sensor data indicates that the imaging sensor should be operated in a second state, operating the imaging sensor of the head-wearable device to record image data, causing execution of a task, based on the second image data, and presenting information to the user. The method further includes, in accordance with a determination that the second image data indicates that the camera should no longer be operated in a second state, operate the camera in the first state. The imaging sensor is configured to consume more power while operating in the second state as compared to the first state.

## Description

### RELATED APPLICATIONS

This application claims priority to U.S. Provisional Application Serial No. 63/801,745, filed May 7, 2025, entitled "Coordination Of Low-Power And High-Power Cameras At Head-Wearable Devices And Techniques And Methods Of Use Thereof".

### TECHNICAL FIELD

This relates generally to methods for switching between low-power and high-power cameras of a head-wearable device.

### BACKGROUND

Many head-worn devices, such as smart glasses and extended-reality (XR) glasses, require high-quality image data to perform a variety of tasks, and capturing the high-quality image data requires cameras that consume more power than lower-quality cameras. Power is a limited resource on head-wearable devices to the desire for lightweight devices limiting the size of power supplies on such devices. Thus, to lengthen the battery life of head-worn devices, high-quality cameras should only be used when necessary to perform tasks, and there must be a method for determining when use of the high-quality cameras is necessary.

As such, there is a need to address one or more of the above-identified challenges. A brief summary of solutions to the issues noted above are described below.

### SUMMARY

The present invention provides a non-transitory computer readable storage medium, a method and a head-wearable device as defined in the appended claims.

In accordance with a first aspect, there is provided a non-transitory computer readable storage medium storing instructions that, when executed by one or more processors, cause the one or more processors to:
while a head-wearable device is worn by a user and an imaging sensor of the head-wearable device is operating in a low-power state:
in accordance with a determination that sensor data indicates that the imaging sensor should be operated in a high-power state, distinct from the low-power state:
   cause the imaging sensor to operate in the high-power state, wherein the imaging sensor is configured to consume more power while operating in the high-power state as compared to the low-power state;
   cause the imaging sensor to record image data;
   cause execution of a task, based on the image data; and
   cause information, based on the execution of the task, to be presented to the user; and
in accordance with a determination that additional sensor data indicates that the imaging sensor should no longer be operated in the high-power state, cause the imaging sensor to operate in the low-power state.

The imaging sensor may have a high resolution while operating in the high-power state and a low resolution while operating in the low-power state, wherein the high resolution is greater than the low resolution;
the imaging sensor may have a narrow field-of-view while operating in the high-power state and a wide field-of-view while operating in the low-power state, wherein the wide field-of-view is greater than the narrow field-of-view; and
the imaging sensor may have a high frame rate while operating in the high-power state and a low frame rate while operating in the low-power state, wherein the high frame rate is greater than the low frame rate.

The instructions may further cause the one or more processors to:
after causing the imaging sensor to operate in the low-power state:
in accordance with another determination that sensor data indicates that the imaging sensor should be operated in the high-power state:
cause the imaging sensor to operate in the high-power state;
cause the imaging sensor to record other image data;
cause execution of another task, based on the other image data; and
cause other information, based on the execution of the other task, to be presented to the user.

The instructions may further cause the one or more processors to:
after causing the information, based on the execution of the task, to be presented to the user:
cause the imaging sensor to record additional image data;
cause execution of an additional task, based on the additional image data; and
cause additional information, based on the execution of the additional task, to be presented to the user.

The sensor data may be captured at the imaging sensor while the imaging sensor is operating in the low-power state.

The instructions may further cause the one or more processors to:
while the imaging sensor is operating in the low-power state:
obtain input data indicating a user input from the user, wherein the determination that the sensor data indicates that the imaging sensor should be operated in the high-power state is based on the user input.

The instructions may further cause one or more processors to:
while the imaging sensor is operating in the high-power state:
obtain additional input data indicating an additional user input from the user, wherein the determination that the additional sensor data indicates that the imaging sensor should no longer be operated in a high-power state is based on the additional user input.

The determination that the sensor data indicates that the imaging sensor should be operated in the high-power state may comprise a determination, based on the sensor data, that the user is looking at one or more objects.

The determination that the additional sensor data indicates that the imaging sensor should no longer be operated in the high-power state may comprise a determination, based on the additional sensor data, that the user is no longer looking at the one or more objects.

The additional sensor data may be captured at the imaging sensor while the imaging sensor is operating in the high-power state.

The sensor data may be captured at one or more of another sensor of the head-wearable device and another device communicatively coupled to the head-wearable device.

The additional sensor data may be captured at one or more of an additional sensor of the head-wearable device and the other device communicatively coupled to the head-wearable device.

The other sensor and the additional sensor may be one or more of a microphone, an inertial measurement unit (IMU) sensor, an eye-tracking device, a biopotential sensor, and a location sensor.

The head-wearable device may be a pair of smart glasses.

In accordance with a second aspect, there is provided a method comprising:
while a head-wearable device is worn by a user and an imaging sensor of the head-wearable device is operating in a low-power state:
in accordance with a determination that sensor data indicates that the imaging sensor should be operated in a high-power state, distinct from the low-power state:
causing the imaging sensor to operate in the high-power state, wherein the imaging sensor is configured to consume more power while operating in the high-power state as compared to the low-power state;
recording image data at the imaging sensor;
executing a task, based on the image data; and
presenting information, based on the execution of the task, to the user; and
in accordance with a determination that additional sensor data indicates that the imaging sensor should no longer be operated in the high-power state, causing the imaging sensor to operate in the low-power state.

The imaging sensor may have a high resolution while operating in the high-power state and a low resolution while operating in the low-power state, wherein the high resolution is greater than the low resolution;
the imaging sensor may have a narrow field-of-view while operating in the high-power state and a wide field-of-view while operating in the low-power state, wherein the wide field-of-view is greater than the narrow field-of-view; and
the imaging sensor may have a high frame rate while operating in the high-power state and a low frame rate while operating in the low-power state, wherein the high frame rate is greater than the low frame rate.

The method may further comprise:
after causing the imaging sensor to operate in the low-power state:
in accordance with another determination that sensor data indicates that the imaging sensor should be operated in the high-power state:
causing the imaging sensor to operate in the high-power state;
recording other image data at the imaging sensor;
executing another task, based on the other image data; and
presenting other information, based on the execution of the other task, to the user.

In accordance with a third aspect, there is provided a head-wearable device comprising an imaging sensor, the head-wearable device configured to:
while the head-wearable device is worn by a user and the imaging sensor of the head-wearable device is operating in a low-power state:
in accordance with a determination that sensor data indicates that the imaging sensor should be operated in a high-power state, distinct from the low-power state:
cause the imaging sensor to operate in the high-power state, wherein the imaging sensor is configured to consume more power while operating in the high-power state as compared to the low-power state;
record image data at the imaging sensor;
execute a task, based on the image data; and
present information, based on the execution of the task, to the user; and
in accordance with a determination that additional sensor data indicates that the imaging sensor should no longer be operated in the high-power state, cause the imaging sensor to operate in the low-power state.

The imaging sensor may have a high resolution while operating in the high-power state and a low resolution while operating in the low-power state, wherein the high resolution is greater than the low resolution;
the imaging sensor may have a narrow field-of-view while operating in the high-power state and a wide field-of-view while operating in the low-power state, wherein the wide field-of-view is greater than the narrow field-of-view; and
the imaging sensor may have a high frame rate while operating in the high-power state and a low frame rate while operating in the low-power state, wherein the high frame rate is greater than the low frame rate.

The head-wearable device may be further configured to:
after causing the imaging sensor to operate in the low-power state:
in accordance with another determination that sensor data indicates that the imaging sensor should be operated in the high-power state:
cause the imaging sensor to operate in the high-power state;
record other image data at the imaging sensor;
execute another task, based on the other image data; and
present other information, based on the execution of the other task, to the user.

One example of a head-worn device is described herein. This example extended-reality headset includes at least one camera, and a non-transitory computer readable storage medium including one or more programs, where the one or more programs are configured to be executed by one or more processors. The non-transitory computer readable storage medium includes instructions that, when executed by the head-wearable device, cause the head-wearable device, while the head-wearable device is worn by a user and while an imaging sensor of the head-wearable device is operating in a first state, to receive sensor data (e.g., low-resolution images) from a first sensor (e.g., a low-power camera, a GPS, etc.). The instructions further cause the head-wearable device to, in accordance with a determination that sensor data indicates that the imaging sensor should be operated in a second state, distinct from the first state (e.g., detects a person, detects a building, detects a room, etc.) operate the imaging sensor (e.g., a high-power camera) of the head-wearable device to record image data, wherein the imaging sensor is configured to consume more power while operating in the second state as compared to the first state; cause execution of a task (e.g., open a social media app, open a webpage, open a notetaking app, etc.), based on the image data. The instructions further cause the head-wearable device to present information, based on the execution of the task, to the user (e.g., present the social media page of the person, present a webpage of the building, present the notetaking app, etc.). The instructions further cause the head-wearable device to, in accordance with a determination that the sensor data indicates that the imaging sensor should no longer be operated in a second state, operate the imaging sensor in the first state.

The non-transitory computer readable storage medium(s) described above is/are understood to: (i) be implemented on a system that includes one or more devices (e.g., an extended-reality headset (e.g., a mixed-reality (MR) headset, an augmented-reality (AR) headset, etc.), a wrist-wearable device, an intermediary processing device, a smart textile-based garment), (ii) to be implemented on a single device (e.g., MR headset, an AR headset, a wrist-wearable device, an intermediary processing device, a smart textile-based garment, etc.), and (iii) be implemented as a method.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A, 1B, and 1C-1, 1C-2 illustrate example MR and AR systems, in accordance with some embodiments.
Figures 2A-2D illustrate an example of the head-wearable device 110 switching the imaging sensor 112 between the low-power state of operation and the high-power state of operation based on sensor data.
Figure 3 illustrates a flow diagram of a method for coordinating low-power and high-power cameras at a head-wearable device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of extended-realities (XR) such as mixed-reality (MR) and augmented-reality (AR) systems. Mixed-realities and augmented-realities, as described herein, are any superimposed functionality and or sensory-detectable presentation provided by an mixed-reality and augmented-reality systems within a user's physical surroundings. Such mixed-realities can include and/or represent virtual realities and virtual realities in which at least some aspects of the surrounding environment are reconstructed within the virtual environment (e.g., displaying virtual reconstructions of physical objects in a physical environment to avoid the user colliding with the physical objects in surrounding physical environment). In the case of mixed-realities, the surrounding environment that is presented is captured via one or more sensors configured to capture the surrounding environment (e.g., a camera). While the wearer of a mixed-reality headset may see the surrounding environment in full detail, they are seeing a reconstruction of the environment reproduced via one or more sensors (i.e., the physical objects are not directly viewed by the user). Thus, a mixed-reality headset distinguishes itself from an AR headset in that it does not allow for direct viewing of a surrounding environment. In some embodiments, a MR headset can also forgo displaying reconstructions of objects in the physical environment, thereby providing a use3r with an entirely virtual reality (VR) experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es). Throughout this application the term extended realities (XR) is a catchall term to cover both augmented realities and mixed realities. In addition, head-wearable device is catchall term that covers extended-reality headsets such as augmented-reality headsets and mixed-reality headsets.

In one example AR or MR system, a user can perform a swiping in-air hand gesture to cause a song to be skipped by a song-providing API providing playback at, for example, a home speaker. As alluded to above a MR environment, as described herein, can include, but is not limited to, VR environments can, include non-immersive, semi-immersive, and fully immersive VR environments. As also alluded to above, AR environments can include marker-based augmented-reality environments, markerless augmented-reality environments, location-based augmented-reality environments, and projection-based augmented-reality environments. The above descriptions are not exhaustive and any other environment that allows for intentional environmental lighting to pass through to the user would fall within the scope of augmented-reality and any other environment that does not allow for intentional environmental lighting to pass through to the user would fall within the scope of a mixed-reality.

AR and MR content can include completely generated content or generated content combined with captured (e.g., real-world) content. The AR and MR content can include video, audio, haptic events, or some combination thereof, any of which can be presented in a single channel or in multiple channels (such as stereo video that produces a three-dimensional effect to a viewer). Additionally, in some embodiments, AR and MR can also be associated with applications, products, accessories, services, or some combination thereof, which are used, for example, to create content in an AR or MR environment and/or are otherwise used in (e.g., to perform activities in) AR and MR environments.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMU)s of a wrist-wearable device, and/or one or more sensors included in a smart textile wearable device) and/or detected via image data captured by an imaging device of a wearable device (e.g., a camera of a head-wearable device, an external tracking camera setup in the surrounding environment)) or a combination of the user's hands. In-air means, in some embodiments, that the user hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single or double finger tap on a table, on a user's hand or another finger, on the user's leg, a couch, a steering wheel, etc.). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight (ToF) sensors, sensors of an inertial measurement unit (IMU), capacitive sensors, strain sensors, etc.) detected by a wearable device worn by the user and/or other electronic devices in the user's possession (e.g., smartphones, laptops, imaging devices, intermediary devices, and/or other devices described herein).

A gaze gesture, as described herein, can include an eye movement and/or a head movement indicative of a location of a gaze of the user, an implied location of the gaze of the user, and/or an approximated location of the gaze of the user, in the surrounding environment, the virtual environment, and/or the displayed user interface. The gaze gesture can be detected and determined based on (i) eye movements captured by one or more eye-tracking cameras (e.g., one or more cameras positioned to capture image data of one or both eyes of the user) and/or (ii) a combination of a head orientation of the user (e.g., based on head and/or body movements) and image data from a point-of-view camera (e.g., a forward-facing camera of the head-wearable device). The head orientation is determined based on IMU data captured by an IMU sensor of the head-wearable device. In some embodiments, the IMU data indicates a pitch angle (e.g., the user nodding their head up-and-down) and a yaw angle (e.g., the user shaking their head side-to-side). The head-orientation can then be mapped onto the image data captured from the point-of-view camera to determine the gaze gesture. For example, a quadrant of the image data that the user is looking at can be determined based on whether the pitch angle and the yaw angle are negative or positive (e.g., a positive pitch angle and a positive yaw angle indicate that the gaze gesture is directed toward a top-left quadrant of the image data, a negative pitch angle and a negative yaw angle indicate that the gaze gesture is directed toward a bottom-right quadrant of the image data, etc.). In some embodiments, the IMU data and the image data used to determine the gaze are captured at a same time, and/or the IMU data and the image data used to determine the gaze are captured at offset times (e.g., the IMU data is captured at a predetermined time (e.g., 0.01 seconds to 0.5 seconds) after the image data is captured). In some embodiments, the head-wearable device includes a hardware clock to synchronize the capture of the IMU data and the image data. In some embodiments, object segmentation and/or image detection methods are applied to the quadrant of the image data that the user is looking at.

The devices include systems, wrist-wearable devices, headset devices, and smart textile-based garments. Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, an HIPD, a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing and/or customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include: (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) global-position system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a SLAM camera(s)); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors), and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include: (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications, (x) camera applications, (xi) web-based applications; (xii) health applications; (xiii) AR and MR applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some embodiments, a communication interface can refer to a software layer that enables different software programs to communicate with each other (e.g., application programming interfaces (APIs) and protocols such as HTTP and TCP/IP).

As described herein, a graphics module is a component or software module that is designed to handle graphical operations and/or processes, and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example Extended Reality Systems

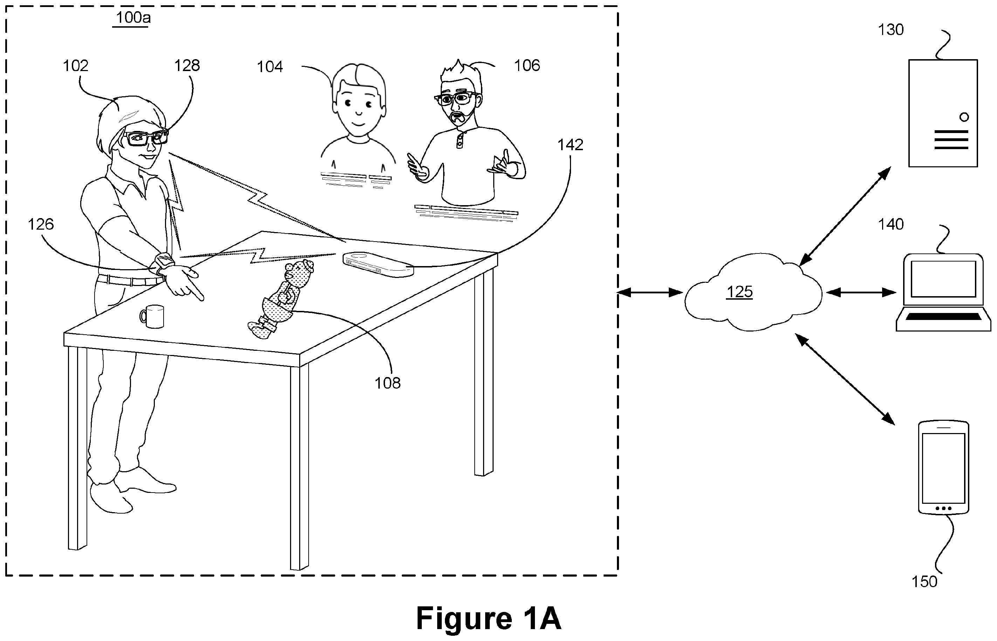

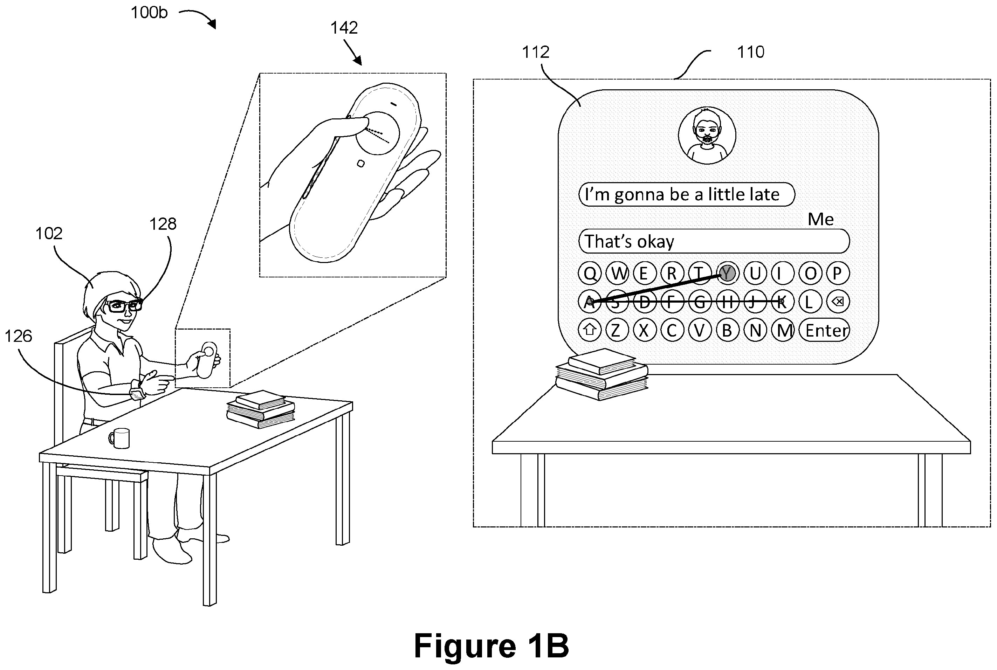

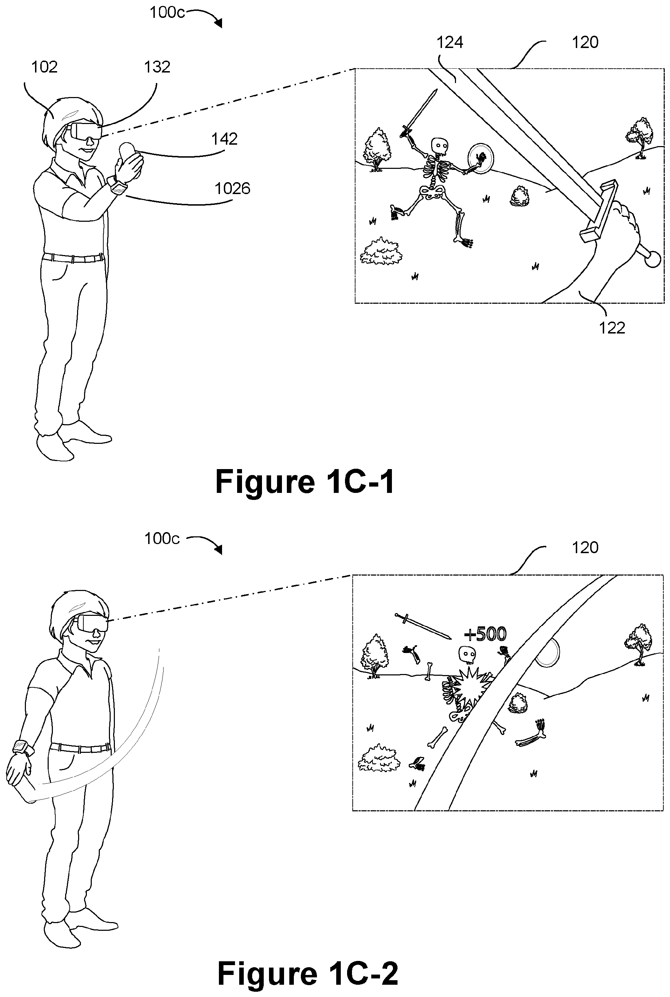

Figures 1A, 1B, 1C-1, and 1C-2, illustrate example XR systems that include AR and MR systems, in accordance with some embodiments. Figure 1A shows a first XR system 100a and first example user interactions using a wrist-wearable device 126, a head-wearable device (e.g., AR device 128), and/or a handheld intermediary processing device (HIPD) 130. Figure 1B shows a second XR system 100b and second example user interactions using a wrist-wearable device 126, AR device 128, and/or an HIPD 142. Figures 1C-1 and 1C-2 show a third MR system 100c and third example user interactions using a wrist-wearable device 126, a head-wearable device (e.g., a mixed-reality device such as a virtual-reality (VR) device), and/or an HIPD 142. As the skilled artisan will appreciate upon reading the descriptions provided herein, the above-example AR and MR systems (described in detail below) can perform various functions and/or operations.

The wrist-wearable device 126, the head-wearable devices, and/or the HIPD 142 can communicatively couple via a network 125 (e.g., cellular, near field, Wi-Fi, personal area network, wireless LAN, etc.). Additionally, the wrist-wearable device 126, the head-wearable devices, and/or the HIPD 142 can also communicatively couple with one or more servers 130, computers 140 (e.g., laptops, computers, etc.), mobile devices 150 (e.g., smartphones, tablets, etc.), and/or other electronic devices via the network 125 (e.g., cellular, near field, Wi-Fi, personal area network, wireless LAN, etc.). Similarly, a smart textile-based garment, when used, can also communicatively couple with the wrist-wearable device 126, the head-wearable device(s), the HIPD 142, the one or more servers 130, the computers 140, the mobile devices 150, and/or other electronic devices via the network 125 to provide inputs.

Turning to Figure 1A, a user 102 is shown wearing the wrist-wearable device 126 and the AR device 128, and having the HIPD 142 on their desk. The wrist-wearable device 126, the AR device 128, and the HIPD 142 facilitate user interaction with an AR environment. In particular, as shown by the first AR system 100a, the wrist-wearable device 126, the AR device 128, and/or the HIPD 142 cause presentation of one or more avatars 104, digital representations of contacts 106, and virtual objects 108. As discussed below, the user 102 can interact with the one or more avatars 104, digital representations of the contacts 106, and virtual objects 108 via the wrist-wearable device 126, the AR device 128, and/or the HIPD 142. In addition, the user 102 is also able to directly view physical objects in the environment, such as a physical table 129, through transparent lens(es) and waveguide(s) of the AR device 128. Alternatively, a MR device could be used in place of the AR device 128 and a similar user experience can take place, but the user would not be directly viewing physical objects in the environment, such as table 129, and would instead be presented with a virtual reconstruction of the table 129 produced from one or more sensors of the MR device (e.g., an outward facing camera capable of recording the surrounding environment).

The user 102 can use any of the wrist-wearable device 126, the AR device 128 (e.g., through physical inputs at the AR device and/or built in motion tracking of a user's extremities), a smart-textile garment, externally mounted extremity tracking device, the HIPD 142 to provide user inputs, etc. For example, the user 102 can perform one or more hand gestures that are detected by the wrist-wearable device 126 (e.g., using one or more EMG sensors and/or IMUs built into the wrist-wearable device) and/or AR device 128 (e.g., using one or more image sensors or cameras) to provide a user input. Alternatively, or additionally, the user 102 can provide a user input via one or more touch surfaces of the wrist-wearable device 126, the AR device 128, and/or the HIPD 142, and/or voice commands captured by a microphone of the wrist-wearable device 126, the AR device 128, and/or the HIPD 142. In some embodiments, the wrist-wearable device 126, the AR device 128, and/or the HIPD 142 include a digital assistant to help the user in providing a user input (e.g., completing a sequence of operations, suggesting different operations or commands, providing reminders, confirming a command). In some embodiments, the digital assistant can be invoked through an input occurring at the AR device 128 (e.g., via an input at a temple arm of the AR device 128). In some embodiments, the user 102 can provide a user input via one or more facial gestures and/or facial expressions. For example, cameras of the wrist-wearable device 126, the AR device 128, and/or the HIPD 142 can track the user 102's eyes for navigating a user interface.

The wrist-wearable device 126, the AR device 128, and/or the HIPD 142 can operate alone or in conjunction to allow the user 102 to interact with the AR environment. In some embodiments, the HIPD 142 is configured to operate as a central hub or control center for the wrist-wearable device 126, the AR device 128, and/or another communicatively coupled device. For example, the user 102 can provide an input to interact with the AR environment at any of the wrist-wearable device 126, the AR device 128, and/or the HIPD 142, and the HIPD 142 can identify one or more back-end and front-end tasks to cause the performance of the requested interaction and distribute instructions to cause the performance of the one or more back-end and front-end tasks at the wrist-wearable device 126, the AR device 128, and/or the HIPD 142. In some embodiments, a back-end task is a background-processing task that is not perceptible by the user (e.g., rendering content, decompression, compression, etc.), and a front-end task is a user-facing task that is perceptible to the user (e.g., presenting information to the user, providing feedback to the user, etc.)). The HIPD 142 can perform the back-end tasks and provide the wrist-wearable device 126 and/or the AR device 128 operational data corresponding to the performed back-end tasks such that the wrist-wearable device 126 and/or the AR device 128 can perform the front-end tasks. In this way, the HIPD 142, which has more computational resources and greater thermal headroom than the wrist-wearable device 126 and/or the AR device 128, performs computationally intensive tasks and reduces the computer resource utilization and/or power usage of the wrist-wearable device 126 and/or the AR device 128.

In the example shown by the first AR system 100a, the HIPD 142 identifies one or more back-end tasks and front-end tasks associated with a user request to initiate an AR video call with one or more other users (represented by the avatar 104 and the digital representation of the contact 106) and distributes instructions to cause the performance of the one or more back-end tasks and front-end tasks. In particular, the HIPD 142 performs back-end tasks for processing and/or rendering image data (and other data) associated with the AR video call and provides operational data associated with the performed back-end tasks to the AR device 128 such that the AR device 128 performs front-end tasks for presenting the AR video call (e.g., presenting the avatar 104 and the digital representation of the contact 106).

In some embodiments, the HIPD 142 can operate as a focal or anchor point for causing the presentation of information. This allows the user 102 to be generally aware of where information is presented. For example, as shown in the first AR system 100a, the avatar 104 and the digital representation of the contact 106 are presented above the HIPD 142. In particular, the HIPD 142 and the AR device 128 operate in conjunction to determine a location for presenting the avatar 104 and the digital representation of the contact 106. In some embodiments, information can be presented within a predetermined distance from the HIPD 142 (e.g., within five meters). For example, as shown in the first AR system 100a, virtual object 108 is presented on the desk some distance from the HIPD 130. Similar to the above example, the HIPD 130 and the AR device 128 can operate in conjunction to determine a location for presenting the virtual object 108. Alternatively, in some embodiments, presentation of information is not bound by the HIPD 130. More specifically, the avatar 104, the digital representation of the contact 106, and the virtual object 108 do not have to be presented within a predetermined distance of the HIPD 130. While an AR device 128 is described working with an HIPD, a MR headset can be interacted with in the same way as the AR device 128.

User inputs provided at the wrist-wearable device 126, the AR device 128, and/or the HIPD 142 are coordinated such that the user can use any device to initiate, continue, and/or complete an operation. For example, the user 102 can provide a user input to the AR device 128 to cause the AR device 128 to present the virtual object 108 and, while the virtual object 108 is presented by the AR device 128, the user 102 can provide one or more hand gestures via the wrist-wearable device 126 to interact and/or manipulate the virtual object 108. While an AR device 128 is described working with a wrist-wearable device 126, a MR headset can be interacted with in the same way as the AR device 128.

Figure 1B shows the user 102 wearing the wrist-wearable device 126 and the AR device 128, and holding the HIPD 142. In the second AR system 100b, the wrist-wearable device 126, the AR device 128, and/or the HIPD 130 are used to receive and/or provide one or more messages to a contact of the user 102. In particular, the wrist-wearable device 126, the AR device 128, and/or the HIPD 130 detect and coordinate one or more user inputs to initiate a messaging application and prepare a response to a received message via the messaging application.

In some embodiments, the user 102 initiates, via a user input, an application on the wrist-wearable device 126, the AR device 128, and/or the HIPD 130 that causes the application to initiate on at least one device. For example, in the second AR system 100b the user 102 performs a hand gesture associated with a command for initiating a messaging application (represented by messaging user interface 112); the wrist-wearable device 126 detects the hand gesture; and, based on a determination that the user 102 is wearing AR device 128, causes the AR device 128 to present a messaging user interface 112 of the messaging application. The AR device 128 can present the messaging user interface 112 to the user 102 via its display (e.g., as shown by user 102's field of view 110). In some embodiments, the application is initiated and can be run on the device (e.g., the wrist-wearable device 126, the AR device 128, and/or the HIPD 142) that detects the user input to initiate the application, and the device provides another device operational data to cause the presentation of the messaging application. For example, the wrist-wearable device 126 can detect the user input to initiate a messaging application, initiate and run the messaging application, and provide operational data to the AR device 128 and/or the HIPD 142 to cause presentation of the messaging application. Alternatively, the application can be initiated and run at a device other than the device that detected the user input. For example, the wrist-wearable device 126 can detect the hand gesture associated with initiating the messaging application and cause the HIPD 142 to run the messaging application and coordinate the presentation of the messaging application.

Further, the user 102 can provide a user input provided at the wrist-wearable device 126, the AR device 128, and/or the HIPD 130 to continue and/or complete an operation initiated at another device. For example, after initiating the messaging application via the wrist-wearable device 126 and while the AR device 128 presents the messaging user interface 112, the user 102 can provide an input at the HIPD 142 to prepare a response (e.g., shown by the swipe gesture performed on the HIPD 142). The user 102's gestures performed on the HIPD 142 can be provided and/or displayed on another device. For example, the user 102's swipe gestures performed on the 130 are displayed on a virtual keyboard of the messaging user interface 112 displayed by the AR device 128.

In some embodiments, the wrist-wearable device 126, the AR device 128, the HIPD 142, and/or other communicatively coupled devices can present one or more notifications to the user 102. The notification can be an indication of a new message, an incoming call, an application update, a status update, etc. The user 102 can select the notification via the wrist-wearable device 126, the AR device 128, or the HIPD 142 and cause presentation of an application or operation associated with the notification on at least one device. For example, the user 102 can receive a notification that a message was received at the wrist-wearable device 126, the AR device 128, the HIPD 142, and/or other communicatively coupled device and provide a user input at the wrist-wearable device 126, the AR device 128, and/or the HIPD 142 to review the notification, and the device detecting the user input can cause an application associated with the notification to be initiated and/or presented at the wrist-wearable device 126, the AR device 128, and/or the HIPD 142.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 128 can present to the user 102 game application data and the HIPD 142 can use a controller to provide inputs to the game. Similarly, the user 102 can use the wrist-wearable device 126 to initiate a camera of the AR device 128, and the user can use the wrist-wearable device 126, the AR device 128, and/or the HIPD 142 to manipulate the image capture (e.g., zoom in or out, apply filters, etc.) and capture image data.

While an AR device 128 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing LED(s) configured to provide a user with information, e.g., a LED around the right-side lens can illuminate to notify the wearer to turn right while directions are being provided or a LED on the left-side can illuminate to notify the wearer to turn left while directions are being provided. In another embodiment, the AR device can include an outward facing projector such that information (e.g., text information, media, etc.) may be displayed on the palm of a user's hand or other suitable surface (e.g., a table, whiteboard, etc.). In yet another embodiment, information may also be provided by locally dimming portions of a lens to emphasize portions of the environment in which the user's attention should be directed. These examples are non-exhaustive and features of one AR device described above can combined with features of another AR device described above. While features and experiences of an AR device have been described generally in the preceding sections, it is understood that the described functionalities and experiences can be applied in a similar manner to a MR headset, which is described below in the proceeding sections.

Turning to Figures 1C-1 and 1C-2, the user 102 is shown wearing the wrist-wearable device 126 and a MR device 132 (e.g., a device capable of providing either an entirely virtual reality (VR) experience or a mixed reality experience that displays object(s) from a physical environment at a display of the device), and holding the HIPD 142. In the third AR system 100c, the wrist-wearable device 126, the MR device 132, and/or the HIPD 142 are used to interact within an MR environment, such as a VR game or other MR/VR application. While the MR device 132 present a representation of a VR game (e.g., first MR game environment 120) to the user 102, the wrist-wearable device 126, the MR device 132, and/or the HIPD 142 detect and coordinate one or more user inputs to allow the user 102 to interact with the VR game.

In some embodiments, the user 102 can provide a user input via the wrist-wearable device 126, the MR device 132, and/or the HIPD 142 that causes an action in a corresponding MR environment. For example, the user 102 in the third MR system 100c (shown in Figure 1C-1) raises the HIPD 142 to prepare for a swing in the first MR game environment 120. The MR device 132, responsive to the user 102 raising the HIPD 142, causes the MR representation of the user 122 to perform a similar action (e.g., raise a virtual object, such as a virtual sword 124). In some embodiments, each device uses respective sensor data and/or image data to detect the user input and provide an accurate representation of the user 102's motion. For example, image sensors (e.g., SLAM cameras or other cameras) of the HIPD 142 can be used to detect a position of the 130 relative to the user 102's body such that the virtual object can be positioned appropriately within the first MR game environment 120; sensor data from the wrist-wearable device 126 can be used to detect a velocity at which the user 102 raises the HIPD 142 such that the MR representation of the user 122 and the virtual sword 124 are synchronized with the user 102's movements; and image sensors of the MR device 132 can be used to represent the user 102's body, boundary conditions, or real-world objects within the first MR game environment 120.

In Figure 1C-2, the user 102 performs a downward swing while holding the HIPD 142. The user 102's downward swing is detected by the wrist-wearable device 126, the MR device 132, and/or the HIPD 142 and a corresponding action is performed in the first MR game environment 120. In some embodiments, the data captured by each device is used to improve the user's experience within the MR environment. For example, sensor data of the wrist-wearable device 126 can be used to determine a speed and/or force at which the downward swing is performed and image sensors of the HIPD 142 and/or the MR device 132 can be used to determine a location of the swing and how it should be represented in the first MR game environment 120, which, in turn, can be used as inputs for the MR environment (e.g., game mechanics, which can use detected speed, force, locations, and/or aspects of the user 102's actions to classify a user's inputs (e.g., user performs a light strike, hard strike, critical strike, glancing strike, miss) or calculate an output (e.g., amount of damage)).

While the wrist-wearable device 126, the MR device 132, and/or the HIPD 142 are described as detecting user inputs, in some embodiments, user inputs are detected at a single device (with the single device being responsible for distributing signals to the other devices for performing the user input). For example, the HIPD 142 can operate an application for generating the first MR game environment 120 and provide the MR device 132 with corresponding data for causing the presentation of the first MR game environment 120, as well as detect the 102's movements (while holding the HIPD 142) to cause the performance of corresponding actions within the first MR game environment 120. Additionally or alternatively, in some embodiments, operational data (e.g., sensor data, image data, application data, device data, and/or other data) of one or more devices is provide to a single device (e.g., the HIPD 142) to process the operational data and cause respective devices to perform an action associated with processed operational data.

In some embodiments, the user 102 can wear a wrist-wearable device 126, wear a MR device 132, wear a smart textile-based garments 138 ((e.g., wearable gloves haptic gloves), and/or hold an HIPD 142 device. In this embodiment, the wrist-wearable device 126, the MR device 132, and/or the smart textile-based garments 138 are used to interact within an MR environment (e.g., any AR or MR system described above in reference to Figures 1A-1B). While the MR device 132 presents a representation of a MR game (e.g., second MR game environment 130) to the user 102, the wrist-wearable device 126, the MR device 132, and/or the smart textile-based garments 138 detect and coordinate one or more user inputs to allow the user 102 to interact with the MR environment.

In some embodiments, the user 102 can provide a user input via the wrist-wearable device 126, a HIPD 142, the MR device 132, and/or the smart textile-based garments 138 that causes an action in a corresponding MR environment. For example, the user 102. In some embodiments, each device uses respective sensor data and/or image data to detect the user input and provide an accurate representation of the user 102's motion. While four different input devices are shown (i.e., a wrist-wearable device 126, a MR device 132, a HIPD 142, and a smart textile-based garment 138) each one of these input devices entirely on their own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 138) sensor fusion can be utilized to ensure inputs are correct. While multiple input devices are described, it is understood other input devices can be used in conjunction or on their own instead, such as but not limited to: external motion tracking cameras, other wearable devices fitted to different parts of a user, apparatuses that allow for a user to experience walking in a MR while remaining substantially stationary in the physical environment, etc.

As described above, the data captured by each device is used to improve the user's experience within the MR environment. Although not shown, the smart textile-based garments 138 can be used in conjunction with an MR device and/or an HIPD 142.

While some experiences are described as occurring on an AR device and other experiences described as occurring on a MR device, one skilled in the art would appreciate that experiences can be ported over from a MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and device that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

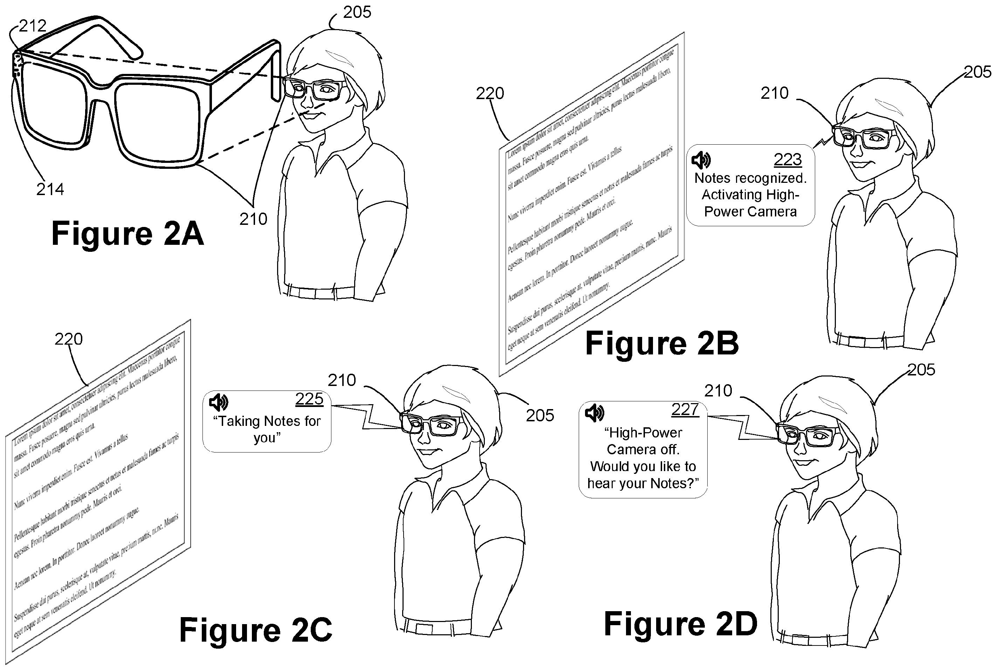

Figures 2A-2D illustrates a head-wearable device 210 switching an imaging sensor 212 between a low-power state of operation and a high-power state of operation based on sensor data, in accordance with some embodiments. In some embodiments, a head-wearable device 210 is an XR headset, a pair of smart glasses, a pair of augmented reality (AR) glasses, XR contacts and/or another head-wearable device. The head-wearable device 210 is configured to be worn by a user 105. The head-wearable device 210 includes an imaging sensor 212 (e.g., one or more cameras) for capturing image data. In some embodiments, the head-wearable device 210 further includes another imaging sensor 214 (e.g., one or more other cameras) for capturing other image data. In some embodiments, the first imaging sensor 212 and the other imaging sensor 214 are located at a front-facing portion of the head-wearable device 210 (e.g., as illustrated in Figure 2A) such that the first imaging sensor 212 and the other imaging sensor 214 capture a field-of-view of the user 205. In some embodiments, the first image data is of a higher quality than the other image data (e.g., the first image data has a greater resolution (e.g., 5 MP), a greater frame rate, a greater dynamic range, and/or a greater color accuracy than the other image data). In some embodiments, the other imaging sensor 214 is configured to operate at a lower power requirement than the imaging sensor 212. In some embodiments, the head-wearable device 210 is communicatively coupled to at least one electronic device. The at least one electronic device can be at least one of a wrist-wearable device, a handheld intermediary processing device, a smartphone, a personal computer, and/or another electronic device. In some embodiments, the head-wearable device 210 and/or the at least one electronic device includes an additional senor (e.g., a microphone, a GPS sensor, an inertial measurement unit (IMU), an eye-tracking sensor, etc.) that captures additional data (e.g., audio data, GPS data, IMU data, eye-tracking data, etc.). In some embodiments, the additional sensor is configured to operate at a lower power requirement than the imaging sensor 212.

In some embodiments, the imaging sensor 212 operates in the high-power state with a high resolution between 10 and 15 megapixels (e.g., 12 megapixels), a high field-of-view between 60 degrees horizontal and 100 degrees horizontal (e.g., 70 degrees horizontal) and between 70 degrees vertical and 120 degrees vertical (e.g., 86 degrees vertical), and a high frame rate between 15 and 60 frames-per-second (e.g., thirty frames-per-second). In some embodiments, the imaging sensor 212 operates in the low-power state with a low resolution between 5 and 9 megapixels (e.g., 6 megapixels), a low field-of-view between 35 degrees horizontal and 60 degrees horizontal (e.g., 47 degrees horizontal) and between 45 degrees vertical and 75 degrees vertical (e.g., 63 degrees vertical), and a low frame rate between 0.5 frames-per-second and 15 frames-per-second (e.g., 1 frames-per-second). In some embodiments, the high field-of-view is narrower than the low field-of-view. In some embodiments, the other imaging sensor 214 includes two or more imaging sensors and each of the two or more imaging sensors is pointed in a different direction relative to the head-wearable device 210 (e.g., one or more downward facing cameras, one or more side-facing cameras, and/or one or more forward-facing cameras). In some embodiments, the other imaging sensor 214 operates in another low-power state with another low resolution between 0.04 megapixels (e.g., 200x200) and 1 megapixel (e.g., 1000x1000) (e.g., a 400x400 resolution of 0.16 megapixels), another high field-of-view between 80 degrees horizontal and 140 degrees horizontal (e.g., 120 degrees horizontal) and between 80 degrees vertical and 140 degrees vertical (e.g., 100 degrees vertical), and another low frame rate between 0.5 frames-per-second and 10 frames-per-second (e.g., 5 frames-per-second).

In some embodiments, the imaging sensor 212 operates in at least a high-power state and a low-power state. When operating in the high-power state, the imaging sensor 212 records first image data (e.g., pictures and/or video data). In some embodiments, when operating in the low-power state, the imaging sensor 212 records second image data (e.g., pictures and/or video data). In some embodiments, the first image data is of a higher quality than the second image data (e.g., the first image data has a greater resolution, a greater frame rate, a greater dynamic range, and/or a greater color accuracy than the second image data). While the imaging sensor 212 is operating in the low-power state, the head-wearable device 210 and/or the at least one electronic device monitors the first image data to detect a first switching condition (e.g., the user 205 is looking at information displayed on a board, as illustrated in Figure 2B). In some embodiments, the first switching condition includes object detection (e.g., an object/place/person/face of interest is identified within the first image data), scene detection (e.g., a change in a scene/place/activity of the user 205 is identified by the first image data), and/or hand detection (e.g., hands of the user 205 and/or hand movements/hand gestures performed by the user 205 are identified in the first image data). In some embodiments, detecting the first switching condition includes accounting for other sensor data received at the head-wearable device 210 and/or a communicatively coupled device (e.g., one or more microphones, one or more IMU sensors, one or more eye-tracking sensors, one or more biopotential sensors, and/or one or more location sensors). In response to detecting that the first switching condition is satisfied, the head-wearable device 210 switches the imaging sensor 212 to operate in the high-power state. In some embodiments, while the imaging sensor 212 is operating in the high-power state, the head-wearable device 210 and/or the at least one electronic device monitors the second image data to detect the first switching condition. In response to detecting that the first switching condition is no longer satisfied, the head-wearable device 210 switches the imaging sensor 212 to operate in the low-power state.

Alternatively, while operating in the low-power state, the imaging sensor 212 does not record image data (e.g., the imaging sensor 212 is turned off), and the other imaging sensor 214 records other image data. While operating in the high-power state, the imaging sensor 212 records first image data (e.g., the imaging sensor 212 is turned on), and the other imaging sensor 214 continues to record the other image data and/or the other imaging sensor 214 does not record the other image data (e.g., the other imaging sensor 214 is turned off while the imaging sensor 212 is turned on). While the imaging sensor 212 is operating in the low-power state, the head-wearable device 210 and/or the at least one electronic device monitors the other image data from the other imaging device 214 to detect a second switching condition (e.g., the user 205 is looking at information displayed on a board, as illustrated in Figure 2B). In response to detecting that the second switching condition is satisfied, the head-wearable device 210 switches the imaging sensor 212 to operate in the high-power state (e.g., the imaging sensor 212 is turned on). In some embodiments, while the imaging sensor 212 is operating in the high-power state, the head-wearable device 210 and/or the at least one electronic device monitors the second image data and/or the other image data to detect the second switching condition. In response to detecting that the second switching condition is no longer satisfied, the head-wearable device 210 switches the imaging sensor 212 to operate in the low-power state (e.g., the imaging sensor 212 is turned off). In some embodiments, when the head-wearable device 210 switches the imaging sensor 212 to operate in the low-power state, the other imaging sensor 214 continues recording the other image data.

In another embodiment, the head-wearable device 210 and/or the at least one electronic device includes an additional sensor (e.g., a microphone, a GPS device, etc.) for detecting additional sensor data. While the imaging sensor 212 is operating in the low-power state, the head-wearable device 210 and/or the at least one electronic device monitors the additional sensor data from the additional sensor to detect a third switching condition (e.g., the user 205 enters a meeting room). In response to detecting that the third switching condition is satisfied, the head-wearable device 210 switches the imaging sensor 212 to operate in the high-power state (e.g., the imaging sensor 212 is turned on). In some embodiments, while the imaging sensor 212 is operating in the high-power state, the head-wearable device 210 and/or the at least one electronic device monitors the second image data and/or the additional sensor data to detect the third switching condition. In response to detecting that the third switching condition is no longer satisfied, the head-wearable device 210 switches the imaging sensor 212 to operate in the low-power state (e.g., turns the imaging sensor 212 off).

In some embodiments, while the imaging device 212 is operating in the high-power state, the head-wearable device 210 and/or the at least one electronic device determines a task (e.g., opening a social media app, opening a webpage, opening a notetaking app, etc.) to be performed at the head-wearable device and/or the at least one electronic device. In some embodiments, the task is based on the second image data and/or the first image data, the other image data, and/or the additional sensor data. After determining the task to be performed, the head-wearable device 210 and/or the at least one electronic device executes the task. In some embodiments, executing the task includes presenting information (e.g., presenting the social media page of the person, presenting a webpage of the building, presenting the notetaking app, etc.) to the user 205. In some embodiments, presenting the information to the user 205 includes visually presenting the information via a display of the head-wearable device 210 (e.g., a display in the lens of a pair of AR glasses) and/or a display of the at least one electronic device. In some embodiments, presenting the information to the user 205 includes audibly presenting the information via a speaker of the head-wearable device 210 (e.g., a speaker a pair of smart glasses, as illustrated in Figure 2C) and/or a speaker of the at least one electronic device. In some embodiments, presenting the information to the user 205 includes presenting an option to the user 205 whether to further execute the task (e.g., asking the user 205 if they would like the head-wearable device 210 to execute the task or return to the low-power state).

Figures 2A-2D illustrate an example of the head-wearable device 210 switching the imaging sensor 212 between the low-power state of operation and the high-power state of operation based on sensor data (e.g., the first image data, the other image data, and/or the additional sensor data), in accordance with some embodiments. Figure 1A illustrates the user 205 wearing the head-wearable device 210, in accordance with some embodiments. A switching condition (e.g., the first, second, and/or third switching condition) is not satisfied, and, thus, with the imaging sensor 212 remains in the low-power state. Figure 2B illustrates the switching condition being satisfied (e.g., the user 205 is looking at a board with writing on it and/or the user 205 enters a meeting room with the board). In accordance with a determination that the switching condition is satisfied, the imaging sensor 212 enters the high-power state. In some embodiments, upon entering the high-power state, the head-wearable device 210 indicates the user 205 (e.g., the head-wearable device 210 presents the audio cue 223 "Notes recognized. Activating High-Power Camera?") that the imaging sensor 212 is in the high-power state. While in the high-power state, the imaging sensor 212 records the second image data and executes a note-taking application, as illustrated in Figure 2C. In some embodiments, executing the note-taking application includes saving notes by copying and/or summarizing information recorded by the imaging sensor 212 (e.g., the writing on the board). In some embodiments, the head-wearable device 210 presents an indication to the user 205 that the note-taking application is being executed (e.g., the head-wearable device 210 presents the audio cue 225 "Taking Notes for you"), as illustrated in Figure 2C. In some embodiments, in accordance with a determination that the switching condition is no longer satisfied (e.g., the user 205 has stopped looking at the board for a predetermined period of time and/or the user 205 leaves the meeting room with the board), the imaging sensor 212 returns to the low-power state, and the head-wearable device ceases executing the note-taking application, as illustrated in Figure 2D. In some embodiments, the user 205 can access the notes by performing a command (e.g., a voice command, a hand-gesture, and/or a touch-input). In some embodiments, in accordance with the determination that the switching condition is no longer satisfied, the head-wearable device 210 prompts the user 205 (e.g., the head-wearable device 210 presents the audio cue 227 "Would you like to hear your Notes?") to perform the command to access the notes, as illustrated in Figure 2D.

As another example the user 205 may perform a request voice command (e.g., "Create a short photo compilation with my daughter laughing at a party"), in accordance with some embodiments. In response to the request voice command, the head-wearable device 210 and/or the at least one electronic device determines a requested switching condition (e.g., detecting a laughter event). The imaging sensor 212 remains in the low-power state until the requested switching condition is satisfied. In accordance with a determination that the switching condition is satisfied (e.g., a microphone of the head-wearable device detects laughter), the imaging sensor 212 enters the high-power state. While in the high-power state, the imaging sensor 212 records the second image data (e.g., video data) and executes a photo-taking application. In some embodiments, executing the photo-taking application includes detecting a person's face (e.g., the user's daughter's face) in the second image data recorded by the imaging sensor 212 (e.g., via a facial recognition program). In accordance with a determination that the person's face is detected in the second image data, the head-wearable device saves at least one image frame of the second image data (e.g., a photo and/or a video of the user's daughter). In some embodiments, the head-wearable device 210 presents an indication to the user 205 that the photo-taking application saves at least one image frame of the second image data (e.g., the head-wearable device 210 presents an audio cue "Photo taken"). In some embodiments, in accordance with a determination that the requested switching condition is no longer satisfied (e.g., the user's daughter's face is not detected in the second image data for a predetermined period of time and/or the user 205 performs another voice command, such as "Stop photo compilation"), the imaging sensor 212 returns to the low-power state, and the head-wearable device ceases executing the photo-taking application. In some embodiments, the user 205 can access the at least one image frame saved by the photo-taking application (e.g., the short photo compilation) by performing a command (e.g., a voice command, a hand-gesture, and/or a touch-input). In some embodiments, in accordance with the determination that the switching condition is no longer satisfied, the head-wearable device 110 prompts the user 205 (e.g., the head-wearable device 210 presents an audio cue "Would you like to see the short photo compilation?") to perform the command to access the at least one image frame saved by the photo-taking application.

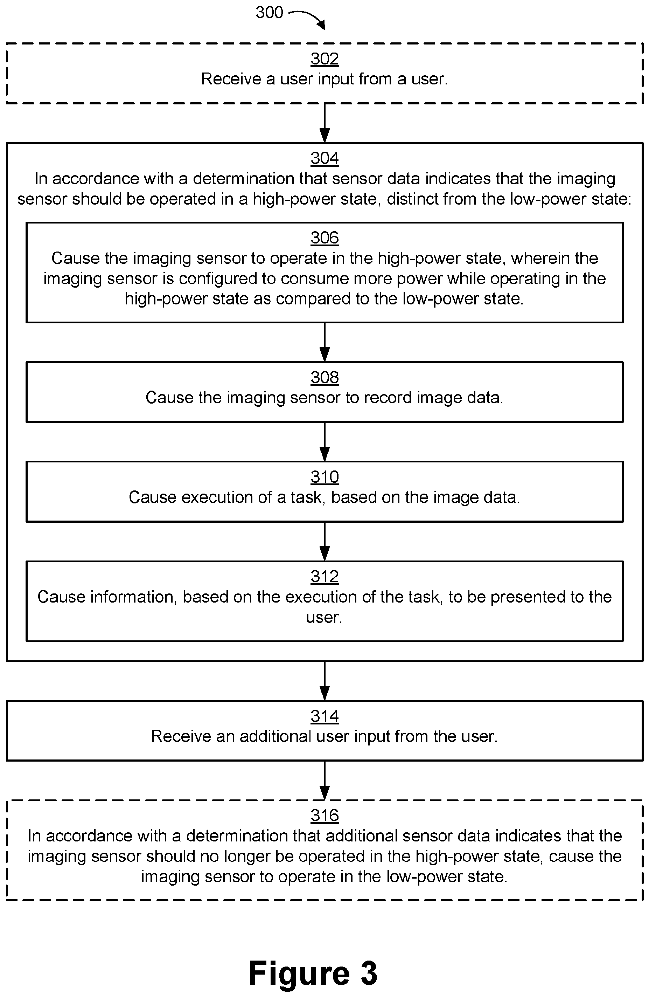

Figure 3 illustrates a flow diagram of a method for coordinating low-power and high-power cameras at a head-wearable device, in accordance with some embodiments. Operations (e.g., steps) of the method 300 can be performed by one or more processors (e.g., central processing unit and/or MCU) of a system including a head-wearable device. At least some of the operations shown in Figure 3 correspond to instructions stored in a computer memory or computer-readable storage medium (e.g., storage, RAM, and/or memory). Operations of the method 300 can be performed by a single device alone or in conjunction with one or more processors and/or hardware components of another communicatively coupled device (e.g., a handheld intermediary processing device) and/or instructions stored in memory or computer-readable medium of the other device communicatively coupled to the head-wearable device. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(A1) Figure 3 shows a flow chart of a method 300 for coordinating low-power and high-power cameras at a head-wearable device, in accordance with some embodiments.

The method 300 occurs at a head-wearable (e.g., the head-wearable device 210) with an imaging device while the head-wearable device is worn by a user (e.g., the user 205) and an imaging sensor (e.g., the imaging sensor 212) of the head-wearable device is operating in a low-power state. In some embodiments, the method 300 includes, in accordance with a determination that sensor data indicates that the imaging sensor should be operated in a high-power state (e.g., the first switching condition, the second switching condition, and/or the third switching condition is satisfied), distinct from the low-power state: (i) causing the imaging sensor to operate in the high-power state, wherein the imaging sensor is configured to consume more power while operating in the high-power state as compared to the low-power state, (ii) causing the imaging sensor to record image data, (iii) causing execution of a task (e.g., opening a social media app, opening a webpage, opening a notetaking app, etc.), based on the image data, and (iv) causing information, based on the execution of the task, to be presented to the user (e.g., presenting the social media page of the person, presenting a webpage of the building, presenting the notetaking app, etc.). The method 300 further includes, in accordance with a determination that additional sensor data indicates that the imaging sensor should no longer be operated in the high-power state (e.g., the first switching condition, the second switching condition, and/or the third switching condition is no longer satisfied), causing the imaging sensor to operate in the low-power state.

(A2) In some embodiments of A1, the imaging sensor has a high resolution (e.g., between 10 and 15 megapixels (e.g., 12 megapixels)) while operating in the high-power state and a low resolution (e.g., between 5 and 9 megapixels (e.g., 6 megapixels)) while operating in the low-power state, wherein the high resolution is greater than the low resolution. The imaging sensor has a narrow field-of-view (e.g., between 60 degrees horizontal and 100 degrees horizontal (e.g., 70 degrees horizontal) and between 70 degrees vertical and 120 degrees vertical (e.g., 86 degrees vertical)) while operating in the high-power state and a wide field-of-view (e.g., between 35 degrees horizontal and 60 degrees horizontal (e.g., 47 degrees horizontal) and between 45 degrees vertical and 75 degrees vertical (e.g., 63 degrees vertical)) while operating in the low-power state, wherein the wide field-of-view is greater than the narrow field-of-view. The imaging sensor has a high frame rate (e.g., between 15 and 60 frames-per-second (e.g., thirty frames-per-second)) while operating in the high-power state and a low frame rate (e.g., between 0.5 frames-per-second and 15 frames-per-second (e.g., 1 frames-per-second)) while operating in the low-power state, wherein the high frame rate is greater than the low frame rate.

(A3) In some embodiments of any of A1-A2, the instructions further cause the head-wearable device to, after causing the imaging sensor to operate in the low-power state and in accordance with another determination that sensor data indicates that the imaging sensor should be operated in the high-power state: (i) causing the imaging sensor to operate in the high-power state, (ii) causing the imaging sensor to record other image data, (iii) causing execution of another task, based on the other image data, and (iv) causing other information, based on the execution of the other task, to be presented to the user.

(A4) In some embodiments of any of A1-A3, the instructions further cause the head-wearable device to, after causing the information, based on the execution of the task, to be presented to the user: (i) causing the imaging sensor to record additional image data, (ii) causing execution of an additional task, based on the additional image data, and (iii) causing additional information, based on the execution of the additional task, to be presented to the user.

(A5) In some embodiments of any of A1-A4, the sensor data is captured at the imaging sensor while the imaging sensor is operating in the low-power state.

(A6) In some embodiments of any of A1-A5, the instructions further cause the head-wearable device to, while the imaging sensor is operating in the low-power state, obtaining input data indicating a user input from the user (e.g., the request voice command) from the user, wherein the determination that the sensor data indicates that the imaging sensor should be operated in the high-power state is based on the user input (e.g., the requested switching condition is satisfied).

(A7) In some embodiments of any of A1-A6, the instructions further cause the head-wearable device to, while the imaging sensor is operating in the high-power state, obtaining additional input data indicating an additional user input from the user, wherein the determination that the additional sensor data indicates that the imaging sensor should no longer be operated in a high-power state is based on the additional user input (e.g., the requested switching condition is no longer satisfied).

(A8) In some embodiments of any of A1-A7, the determination that the sensor data indicates that the imaging sensor should be operated in the high-power state includes a determination, based on the sensor data, that the user is looking at one or more objects.

(A9) In some embodiments of any of A1-A8, the determination that the additional sensor data indicates that the imaging sensor should no longer be operated in the high-power state includes a determination, based on the additional sensor data, that the user is no longer looking at the one or more objects.

(A10) In some embodiments of any of A1-A9, the additional sensor data is captured at the imaging sensor while the imaging sensor is operating in the high-power state.

(A11) In some embodiments of any of A1-A10, the sensor data is captured at another sensor of the head-wearable device (e.g., the other imaging sensor 214) and/or another device communicatively coupled to the head-wearable device.

(A12) In some embodiments of any of A1-A11, the additional sensor data is captured at an additional sensor of the head-wearable device and/or another device communicatively coupled to the head-wearable device.

(A13) In some embodiments of any of A1-A12, the other sensor and/or the additional sensor is one or more of a camera, a microphone, an inertial measurement unit (IMU) sensor, an eye-tracking device, a biopotential sensor, and a location sensor.

(A14) In some embodiments of any of A1-A13, the head-wearable device is a pair of smart glasses (e.g., as illustrated in Figures 2A-2D).

(B1) In some embodiments, another method occurs at a pair of smart glasses (e.g., the head-wearable device 210) while the pair of smart glasses is worn by a user (e.g., the user 205) and a camera (e.g., the imaging sensor 212) of the head-wearable device is operating in a low-power state. In some embodiments, the other method includes, in accordance with a determination that low-power image data captured by the camera indicates that the camera should be operated in a high-power state (e.g., the first switching condition, the second switching condition, and/or the third switching condition is satisfied), distinct from the low-power state: (i) causing the camera to operate in the high-power state, wherein the camera is configured to consume more power while operating in the high-power state as compared to the low-power state, (ii) causing the camera to record high-power image data, (iii) causing execution of a task (e.g., opening a social media app, opening a webpage, opening a notetaking app, etc.), based on the high-power image data, and (iv) causing information, based on the execution of the task, to be presented to the user (e.g., presenting the social media page of the person, presenting a webpage of the building, presenting the notetaking app, etc.). The other method further includes, in accordance with a determination that the high-power image data indicates that the camera should no longer be operated in the high-power state(e.g., the first switching condition, the second switching condition, and/or the third switching condition is no longer satisfied), causing the camera to operate in the low-power state.

(B2) In some embodiments of B1, the other method further includes any of the steps of any of A2-A12.

(C1) In some embodiments, a non-transitory computer readable storage medium includes executable instructions that, when executed by one or more processors, causes performance of any of A1-B2.

(D1) In some embodiments, means (e.g., the head-wearable 210) for performing or causing performance of any of A1-B2.

(E1) In some embodiments, a head-wearable device (e.g., the head-wearable 210) and/or a pair of smart glasses is configured to perform or cause performance of any of A1-B2.

(F1) In some embodiments, an intermediary processing device (e.g., configured to offload processing operations for a head-worn device such as a pair of smart glasses) is configured to perform or cause performance of any of A1-B2.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt-in or opt-out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings, within the scope of the appended claims. The embodiments were chosen and described in order to best explain principles of operation and practical applications, to thereby enable others skilled in the art.

## Claims

1. A non-transitory computer readable storage medium storing instructions that, when executed by one or more processors, cause the one or more processors to:
while a head-wearable device is worn by a user and an imaging sensor of the head-wearable device is operating in a low-power state:
in accordance with a determination that sensor data indicates that the imaging sensor should be operated in a high-power state, distinct from the low-power state:
cause the imaging sensor to operate in the high-power state, wherein the imaging sensor is configured to consume more power while operating in the high-power state as compared to the low-power state;
cause the imaging sensor to record image data;
cause execution of a task, based on the image data; and
cause information, based on the execution of the task, to be presented to the user; and
in accordance with a determination that additional sensor data indicates that the imaging sensor should no longer be operated in the high-power state, cause the imaging sensor to operate in the low-power state.

2. The non-transitory computer readable storage medium of claim 1, wherein:
the imaging sensor has a high resolution while operating in the high-power state and a low resolution while operating in the low-power state, wherein the high resolution is greater than the low resolution;
the imaging sensor has a narrow field-of-view while operating in the high-power state and a wide field-of-view while operating in the low-power state, wherein the wide field-of-view is greater than the narrow field-of-view; and
the imaging sensor has a high frame rate while operating in the high-power state and a low frame rate while operating in the low-power state, wherein the high frame rate is greater than the low frame rate.

3. The non-transitory computer readable storage medium of claim 1 or claim 2, wherein the instructions further cause the one or more processors to:
after causing the imaging sensor to operate in the low-power state:
in accordance with another determination that sensor data indicates that the imaging sensor should be operated in the high-power state:
cause the imaging sensor to operate in the high-power state;
cause the imaging sensor to record other image data;
cause execution of another task, based on the other image data; and
cause other information, based on the execution of the other task, to be presented to the user.

4. The non-transitory computer readable storage medium of any preceding claim, wherein the instructions further cause the one or more processors to:
after causing the information, based on the execution of the task, to be presented to the user:
cause the imaging sensor to record additional image data;
cause execution of an additional task, based on the additional image data; and
cause additional information, based on the execution of the additional task, to be presented to the user.

5. The non-transitory computer readable storage medium of any preceding claim and one or more of the following:
(i) wherein the sensor data is captured at the imaging sensor while the imaging sensor is operating in the low-power state;
(ii) wherein the additional sensor data is captured at the imaging sensor while the imaging sensor is operating in the high-power state;
(iii) wherein the head-wearable device is a pair of smart glasses.

6. The non-transitory computer readable storage medium of any preceding claim, wherein the instructions further cause the one or more processors to:
while the imaging sensor is operating in the low-power state:
obtain input data indicating a user input from the user, wherein the determination that the sensor data indicates that the imaging sensor should be operated in the high-power state is based on the user input;
optionally, wherein the instructions further cause one or more processors to:
while the imaging sensor is operating in the high-power state:
obtain additional input data indicating an additional user input from the user, wherein the determination that the additional sensor data indicates that the imaging sensor should no longer be operated in a high-power state is based on the additional user input.

7. The non-transitory computer readable storage medium of any preceding claim, wherein the determination that the sensor data indicates that the imaging sensor should be operated in the high-power state comprises a determination, based on the sensor data, that the user is looking at one or more objects;
optionally, wherein the determination that the additional sensor data indicates that the imaging sensor should no longer be operated in the high-power state comprises a determination, based on the additional sensor data, that the user is no longer looking at the one or more objects.

8. The non-transitory computer readable storage medium of any preceding claim, wherein the sensor data is captured at one or more of another sensor of the head-wearable device and another device communicatively coupled to the head-wearable device.

9. The non-transitory computer readable storage medium of claim 8, wherein the additional sensor data is captured at one or more of an additional sensor of the head-wearable device and the other device communicatively coupled to the head-wearable device;
optionally, wherein the other sensor and the additional sensor is one or more of a microphone, an inertial measurement unit (IMU) sensor, an eye-tracking device, a biopotential sensor, and a location sensor.

10. A method comprising:
while a head-wearable device is worn by a user and an imaging sensor of the head-wearable device is operating in a low-power state:
in accordance with a determination that sensor data indicates that the imaging sensor should be operated in a high-power state, distinct from the low-power state:
causing the imaging sensor to operate in the high-power state, wherein the imaging sensor is configured to consume more power while operating in the high-power state as compared to the low-power state;
recording image data at the imaging sensor;
executing a task, based on the image data; and
presenting information, based on the execution of the task, to the user; and
in accordance with a determination that additional sensor data indicates that the imaging sensor should no longer be operated in the high-power state, causing the imaging sensor to operate in the low-power state.

11. The method of claim 10, wherein:
the imaging sensor has a high resolution while operating in the high-power state and a low resolution while operating in the low-power state, wherein the high resolution is greater than the low resolution;
the imaging sensor has a narrow field-of-view while operating in the high-power state and a wide field-of-view while operating in the low-power state, wherein the wide field-of-view is greater than the narrow field-of-view; and
the imaging sensor has a high frame rate while operating in the high-power state and a low frame rate while operating in the low-power state, wherein the high frame rate is greater than the low frame rate.

12. The method of claim 10 or claim 11, further comprising:
after causing the imaging sensor to operate in the low-power state:
in accordance with another determination that sensor data indicates that the imaging sensor should be operated in the high-power state:
causing the imaging sensor to operate in the high-power state;
recording other image data at the imaging sensor;
executing another task, based on the other image data; and
presenting other information, based on the execution of the other task, to the user.

13. A head-wearable device comprising an imaging sensor, the head-wearable device configured to:
while the head-wearable device is worn by a user and the imaging sensor of the head-wearable device is operating in a low-power state:
in accordance with a determination that sensor data indicates that the imaging sensor should be operated in a high-power state, distinct from the low-power state:
cause the imaging sensor to operate in the high-power state, wherein the imaging sensor is configured to consume more power while operating in the high-power state as compared to the low-power state;
record image data at the imaging sensor;
execute a task, based on the image data; and
present information, based on the execution of the task, to the user; and
in accordance with a determination that additional sensor data indicates that the imaging sensor should no longer be operated in the high-power state, cause the imaging sensor to operate in the low-power state.

14. The head-wearable device of claim 13, wherein:
the imaging sensor has a high resolution while operating in the high-power state and a low resolution while operating in the low-power state, wherein the high resolution is greater than the low resolution;
the imaging sensor has a narrow field-of-view while operating in the high-power state and a wide field-of-view while operating in the low-power state, wherein the wide field-of-view is greater than the narrow field-of-view; and
the imaging sensor has a high frame rate while operating in the high-power state and a low frame rate while operating in the low-power state, wherein the high frame rate is greater than the low frame rate.

15. The head-wearable device of claim 13 or claim 14, wherein the head-wearable device is further configured to:
after causing the imaging sensor to operate in the low-power state:
in accordance with another determination that sensor data indicates that the imaging sensor should be operated in the high-power state:
cause the imaging sensor to operate in the high-power state;
record other image data at the imaging sensor;
execute another task, based on the other image data; and
present other information, based on the execution of the other task, to the user.
